Europäisches Patentamt

European Patent Office

Office européen des brevets

(11) Veröffentlichungsnummer: **0 160 893**
A2

## (12) EUROPÄISCHE PATENTANMELDUNG

(21) Anmeldenummer: 85105014.6

(22) Anmeldetag: 25.04.85

(51) Int. Cl.⁴: **A 01 B 71/00**

(30) Priorität: 04.05.84 US 607034

(43) Veröffentlichungstag der Anmeldung:
13.11.85 Patentblatt 85/46

(84) Benannte Vertragsstaaten:
DE FR GB

(71) Anmelder: DEERE & COMPANY
1 John Deere Road
Moline Illinois 61265(US)

(72) Erfinder: Kirkpatrick, Kenneth Lawrence
28 Armour Drive
Welland Ontario(CA)

(74) Vertreter: Feldmann, Bernhard
DEERE & COMPANY European Office, Patent
Department Steubenstrasse 36-42 Postfach 503
D-6800 Mannheim 1(DE)

(54) Vorrichtung zum Verbinden eines ersten und eines zweiten Teiles eines Zuggliedes.

(57) Eine Vorrichtung zum Verbinden Zweier Teile (38, 40) eines Zuggliedes (24), etwa einer Deichsel einer lenkbaren Fahrzeuges (10), besteht aus zwei flach aufeinander anliegenden Befestigungsplatten (44, 46), die an den einander zugekehrten Enden der beiden Teile (38, 40) befestigt und über Bolzen (54) und Federn (56) miteinander verbunden sind. Eine Relativbewegung zwischen den beiden Teilen (38, 40) erfolgt entgegen der Wirkung der Federn (56), wobei die Befestigungsplatten (44, 46) mit seitlichen Abwälzkanten (48, 50) aufeinander abwälzen.

FIG. 1

EP 0 160 893 A2

## Vorrichtung zum Verbinden eines ersten und eines zweiten Teiles eines Zuggliedes

Die Erfindung betrifft eine Vorrichtung zum Verbinden eines ersten und eines zweiten Teiles eines Zuggliedes, wobei die beiden Teile an sich zugelegenen Enden über Befestigungsplatten aneinander anliegen und die Befestigungsplatten mittels Bolzen verbunden sind und über Federn aufeinander gedrückt werden, und deren Verwendung.

Diese Vorrichtung (US-PS 3 340 936) wird dazu benutzt, einen Nachläufer an einem Pflug zu befestigen. Dabei ist einer der beiden Teile starr mit einem Pflugrahmen und der andere Teil starr mit dem Nachläufer verbunden. Die Vorrichtung weist eine flache Befestigungsplatte an dem mit dem Pflugrahmen verbundenen Teil und eine gewölbte an dem mit dem Nachläufer verbundenen Teil auf, wobei sich eine Mittenlinie der Wölbung horizontal erstreckt. Jeweils ober- und unterhalb dieser Wölbungsmittenlinie werden beide Befestigungsplatten von einem Bolzen durchdrungen, der selbst konzentrisch von jeweils einer Druckfeder umgeben wird. Die Druckfedern erstrecken sich jeweils zwischen einer auf die Bolzen in der Form von Schrauben aufgesetzten Mutter und einer Rückseite der flachen Befestigungsplatte. Diese Vorrichtung gewährleistet eine Höhenbeweglichkeit des Nachläufers, wobei als dessen Schwenkachse die Wölbungsmittenlinie dient. Diese Höhenbeweglichkeit ist erforderlich, damit der Nachläufer den Bodenunebenheiten folgen kann. Damit eine Überbeanspruchung der Vorrichtung nicht stattfindet, dürfen die Federn nicht zu stramm angezogen sein. Ansonsten tritt aufgrund der hohen Zahl der Lastwechsel eine Materialermüdung an der Vorrichtung auf. Gegebenenfalls können auch seitlich auf den Nachläufer wirkende Kräfte durch die Vorrichtung aufgefangen werden. Aufgrund der gewölbten Oberfläche der einen Befestigungsplatte findet jedoch keine eindeutige und vorherbestimmbare Relativbewegung zwischen den beiden Befestigungsplatten statt, so daß diese in bezug auf deren Festigkeit auch nicht optimal ausgelegt werden können.

Dieser bekannten Vorrichtung haftet der Nachteil an, daß sie keine ausreichende Sicherheit bei hohen zu übertragenden Kräften bietet, sondern bereits bei mittelmäßigen Kräften eine unkontrollierte Relativbewegung zwischen beiden Teilen zuläßt.

Die der Erfindung zugrunde liegende Aufgabe wird darin gesehen, die bekannte Vorrichtung derart fortzuentwickeln, daß sie eine ausreichend feste und zuverlässige Verbindung zwischen den beiden Teilen ergibt, die nur bei bestimmten Beanspruchungen eine Relativbewegung zwischen beiden Teilen zuläßt.

Diese Aufgabe ist erfindungsgemäß dadurch gelöst worden, daß die Befestigungsplatten flach aneinander anliegen und seitliche Abwälzkanten aufweisen, über die sie gegeneinander abwälzen können, wobei jeweils zwei Federn und zwei Bolzen jeder Abwälzkante zugeordnet sind und sich jeweils seitlich einer vertikalen Längsmittenebene befinden.

Auf diese Weise ist eine eindeutige Lage der beiden Befestigungsplatten zueinander vorgegeben, die durch die Verlegung der Abwälzkanten nach außen und somit durch die Verlängerung des Hebelarms nur durch die Aufbringung eines vorherbestimmbaren großen Momentes voneinander wegbewegt werden können. Abgesehen davon, daß zu einer Erhöhung der Haltekraft zwischen beiden Befestigungsplatten auch die Federn verstärkt werden können, kann allein schon durch die Vergrößerung der Befestigungsplatten, was einer Nach-Außen-Verlegung der Abwälzkanten, also einer Vergrößerung des Hebelarms, entspricht, eine weitaus größere Steifigkeit der Vorrichtung erzielt werden.

Dadurch, daß die beiden Befestigungsplatten zueinander deckungsgleich ausgebildet sind, kann es nicht geschehen, daß eine kleinere Befestigungsplatte beim Abwälzen auf einer größeren Befestigungsplatte in deren Oberfläche eine Kerbe eindrückt und somit über längere Zeit gesehen zu einem Bruch führt.

Durch die Merkmale des Anspruches 3 wird erreicht, daß das Zugglied in jeder Richtung gleich steif ist und nicht in einer Kraftangriffsrichtung einen Schwachpunkt hat. Dies wirkt sich hervorragend auf die Funktion und die Festigkeit des Zuggliedes aus.

Insbesondere die Verwendung der erfindungsgemäßen Vorrichtung bei einer Deichsel eines zu ziehenden Fahrzeuges gemäß Anspruch 4, etwa eines Anhängers, die auf dessen Lenkvorrichtung eine Lenkbewegung einleitet, führt zu großen Vorteilen, weil beim Anschlagen der Lenkvorrichtung an einem der Anschläge eine Überbelastung der Deichsel vermieden wird.

In der Zeichnung ist ein nachfolgend näher beschriebenes Ausführungsbeispiel der Erfindung dargestellt. Es zeigt:

Fig. 1     einen Fahrzeugrahmen mit einer erfindungsgemäßen Vorrichtung an einer Deichsel in Draufsicht,

Fig. 2     die Vorrichtung in vergrößerter Darstellung und in Draufsicht,

Fig. 3     die Vorrichtung nach Fig. 2 in Seitenansicht,

Fig. 4     den vorderen Bereich des Fahrzeugrahmens mit der Vorrichtung in vergrößerter Darstellung und in einem Lenkzustand,

Fig. 5    einen Vertikalschnitt durch zwei miteinander verbundene Befestigungsplatten der Vorrichtung.

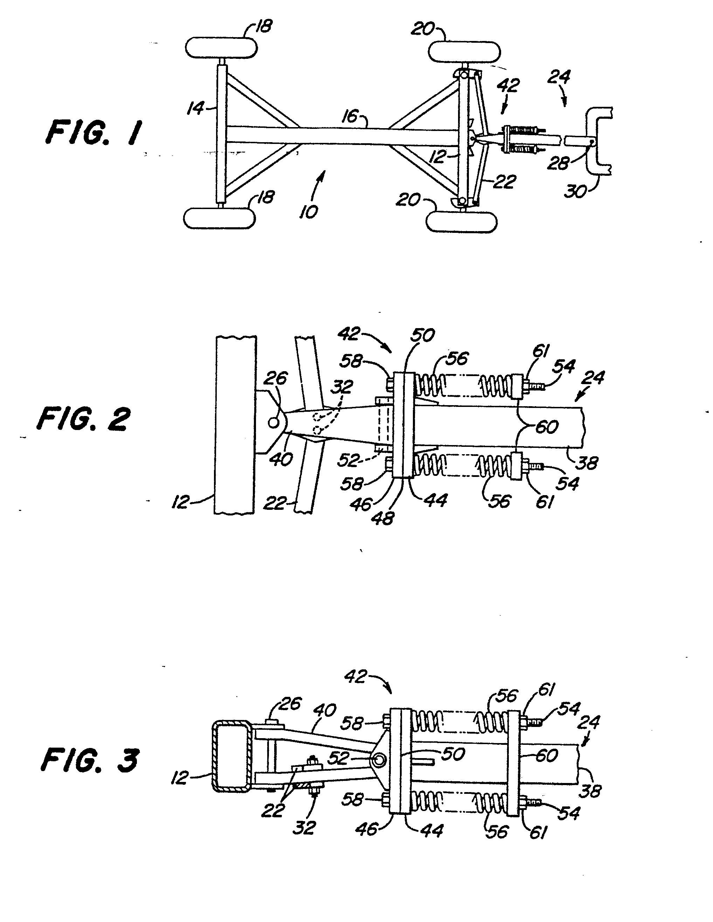

Mit dem Bezugszeichen 10 ist in der Zeichnung ein Fahrzeug bzw. ein Fahrzeugrahmen mit einem rückwärtigen und einem vorderen Achsträger 12 und 14 bezeichnet, wobei die Achsträger 12 und 14 über einen Langbaum 16 miteinander verbunden sind. Ferner sind an dem Fahrzeugrahmen 10 Hinterräder 18 und lenkbare Vorderräder 20, die über eine geteilte Spurstange 22 in der Art einer Ackermann-Lenkung miteinander verbunden sind, vorgesehen. Ein sich längs erstreckendes Zugglied, hier als Deichsel 24, ist in ihrem rückwärtigen, gabelförmig ausgebildeten Bereich mit dem vorderen Achsträger 12 über einen vertikalen Bolzen 26 verbunden, während sie an ihrem vorderen Ende eine Gabel 28 aufweist, die der Verbindung mit einem ziehenden Fahrzeug dient. Andeutungsweise ist eine Anhängeschiene 30, etwa eines Ackerschleppers, dargestellt. Nimmt man an, daß die Deichsel 24 wie herkömmlich ausgebildet wäre, dann lenkt sie die Vorderräder 20 über eine Schwenkverbindung 32 mit der Spurstange 22, wobei bei diesem Ausführungsbeispiel die Schwenkverbindung 32 vor dem vertikalen Bolzen 26 liegt, wie aus Fig. 2 zu erkennen ist. Die Lenkbewegung nach rechts und nach links wird durch jeweils einen rechten und einen linken Anschlag 34 und 36 begrenzt. Man kann hier bereits erkennen, daß bei einem weiteren Verschwenken der Deichsel 24 zum Lenken, obwohl die Spurstange 22 bereits an einem der Anschläge 34 oder 36 anliegt, eine seitliche Biegebeanspruchung der Deichsel 24 hervorgerufen wird, die in einer ernsthaften Beschädigung der Deichsel 24 und/oder mit dieser verbundener Teile enden kann.

Die Erfindung schaltet die Möglichkeit einer Beschädigung dieser Art zumindest weitgehendst aus, und zwar dadurch, daß sie die Deichsel 24 in einen ersten und in einen zweiten Teil, nämlich einen rückwärtigen und einen vorderen Deichselteil 38 und 40, untergliedert, wobei der rückwärtige Deichselteil 38 mit dem Bolzen 26 an dem vorderen Achsträger 12 angreift und der vordere Deichselteil 40 mit der Gabel 28 versehen ist. Diese beiden Deichselteile 38 und 40 sind an jeweils einem ihrer Enden stumpf aneinandergefügt und über einen die erfindungsgemäße Vorrichtung darstellenden Verbindungsmechanismus 42 zusammengefügt. Der Verbindungsmechanismus 42 setzt sich bei diesem Ausführungsbeispiel aus Befestigungsplatten oder einfachen Platten 44 und 46 zusammen, die vorzugsweise rechteckig oder wie in dem Ausführungsbeispiel quadratisch sind und mit ihren Flachseiten aneinander ganzflächig anliegen. Die Platten 44, 46 sind überdies deckungsgleich und haben sich gegenüberliegende, aufrecht ausgerichtete Kontakt- oder Abwälzkanten 48 und 50, die sich - wie aus Fig. 2 ersichtlich - berühren. Die rückwärtige Platte 46 ist vorzugsweise mit einem Paar sich seitlich erstreckender Laschen verschweißt, die in sich quer einen Lagerbolzen 52 aufnehmen, der eine vertikale Schwenkbewegung des vorderen Deichselteils 40 und des Verbindungsmechanismusses 42 relativ zu dem rückwärtigen Deichselteil 38 ermöglicht, was insbesondere dann von Wichtigkeit ist, wenn das Fahrzeug über ein unebenes Gelände bewegt wird. Diese Kreuzgelenkverbindung mit dem Lagerbolzen 52 ist wie herkömmlich bekannt ausgebildet.

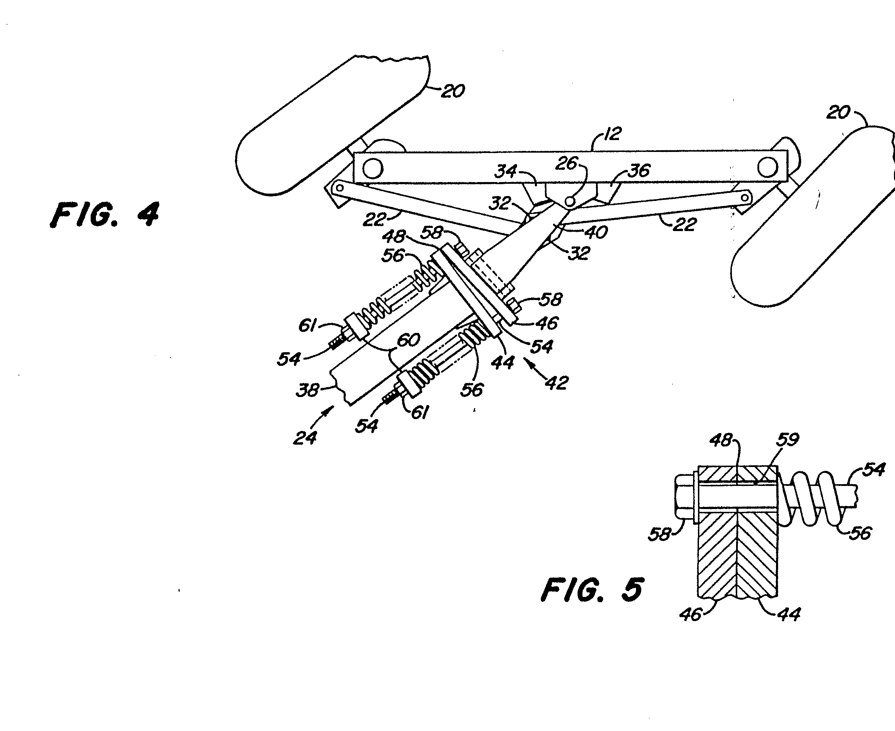

Der Verbindungsmechanismus 42 enthält eine federvorgespannte Vorrichtung, die (bei diesem Ausführungsbeispiel) aus sich längs erstreckenden Bolzen oder Schrauben 54 besteht, von denen jede von einer Feder in der Form einer Schraubenfeder 56 konzentrisch umgeben ist. Jede Schraube 54 erstreckt sich mit relativ viel Spiel lose durch gegeneinander ausgerichtete Bohrungen 59 in den Platten 44 und 46, wie dies aus Fig. 5 hervorgeht. Jede Schraube 54 hat einenends einen Schraubenkopf 58, der an der rückwärtigen Platte 46 anliegt, und anderenends ist auf ihnen eine sich über zwei Schrauben 54 erstreckende Halteschiene 60 mittels Muttern 61 befestigt. Zwischen den Halteschienen 60 und der rückwärtigen Platte 46 erstrecken sich die jeweils den Schrauben 54 zugeordneten Schraubenfedern 56. Die Halteschienen 60 sind jeweils mit einer oberen und einer unteren Ausnehmung zur Aufnahme der Schrauben 54 versehen, wobei die Ausnehmungen jedoch nicht im einzelnen in der Zeichnung wiedergegeben sind. Die Muttern 61 liegen jeweils an der Vorderseite der Halteschienen 60 an, und die Halteschienen 60 selbst dienen dazu, die Schraubenfedern 56 und die Schrauben 54 zueinander parallel zu halten. Aus der Zeichnung ist ferner zu entnehmen, daß zu jeder Seite der Deichsel 24, d. h. links und rechts ihrer vertikalen Längsmittenebene, eine aus zwei Schrauben 54, zwei Schraubenfedern 56 und einer Halteschiene 60 bestehende Vorrichtung angebaut ist. Die Anordnung der Schrauben 54 ist so getroffen, daß sich auch mit Bezug auf eine horizontale Längsmittenebene zwei oberhalb und zwei unterhalb dieser befinden.

Fig. 4 stellt einen Zustand dar, in dem die Vorderräder 20 in Vorwärtsfahrtrichtung gesehen nach rechts geschwenkt sind, und zwar bis der rückwärtige Deichselteil 38 an dem rechten Anschlag 36 anliegt, wobei selbst nach dem Anliegen an dem Anschlag 36 noch eine Seitenkraft nach rechts auf die Deichsel 24 bzw. den vorderen Deichselteil 40 ausgeübt wird. Die Platten 44 und 46 verschwenken daraufhin gegeneinander, und zwar kippen bzw. wälzen sie dabei um die von den rechten Kontaktkanten 48 gebildete Auflagelinie. Die jeweils in Vorwärtsfahrtrichtung gesehen rechten Schraubenfedern 56 halten die Platten 44 und 46 zusammen, und die linken Schraubenfedern 56 werden zusammengedrückt, wenn die Deichsel 24, d. h. deren vorderer Deichselteil 40, weiter seitwärts nach rechts bewegt wird. Die Relativbewegung des rückwärtigen Deichselteils 38 zu dem vorderen Deichselteil 40 wird durch das relativ große Spiel zwischen den Schrauben 54 und den Bohrungen 59 nicht eingeschränkt. Daher können die Platten 44 und 46 relativ zueinander kippen bzw. aufeinander abwälzen, und ein Überlenken wird durch den federvorgespannten Verbindungsmechanismus 42 aufgefangen. Die Funktion der Platten 44 und 46 ist analog, wenn ein Überlenken nach links stattfindet, wobei dann die linken Kontaktkanten 50 die Auflageflächen bilden. Es ist zu erwarten, daß eine Bedienungsperson den Überlenkungszustand bemerkt und aufhört, die Deichsel 24 weiter nach der einen oder der anderen Seite zu verschwenken.

Obwohl bei diesem Ausführungsbeispiel insgesamt vier Schrauben 54 und Schraubenfedern 56 verwendet worden sind, können es auch weniger oder mehr sein. Dies ist insbesondere abhängig von der auf den Fahrzeugrahmen und die Deichsel 24 einwirkenden Kraft.

Diese Erfindung ist nicht nur wirtschaftlich und funktionssicher, sondern sie kann auch an bereits bestehenden Fahrzeugen nachträglich angebaut werden.

## Patentansprüche

1. Vorrichtung zum Verbinden eines ersten und eines zweiten Teiles (38 und 40) eines Zuggliedes (24), wobei die beiden Teile (38, 40) an sich zugelegenen Enden über Befestigungsplatten (44, 46) aneinander anliegen und die Befestigungsplatten (44, 46) mittels Bolzen (54) verbunden sind und über Federn (56) aufeinander gedrückt werden, dadurch gekennzeichnet, daß die Befestigungsplatten (44, 46) flach aneinander anliegen und seitliche Abwälzkanten (48, 50) aufweisen, über die sie gegeneinander abwälzen können, wobei jeweils zwei Federn (56) und zwei Bolzen (54) jeder Abwälzkante (48, 50) zugeordnet sind und sich jeweils seitlich einer vertikalen Längsmittenebene befinden.

2. Vorrichtung nach Anspruch 1, dadurch gekennzeichnet, daß die Befestigungsplatten (44, 46) deckungsgleich ausgebildet sind.

3. Vorrichtung nach einem oder mehreren der vorherigen Ansprüche, wobei die Federn (56) zu den Bolzen (54) koaxial angeordnet sind, dadurch gekennzeichnet, daß vier Federn (56) und vier Bolzen (54) vorgesehen sind, die symmetrisch zu der vertikalen Längsmittenebene und symmetrisch zu einer horizontalen Längsmittenebene des Zuggliedes (24) angeordnet sind.

4. Verwendung einer Vorrichtung nach einem oder mehreren der vorherigen Ansprüche für eine Deichsel (24) eines zu ziehenden Fahrzeuges (10) mit einer Lenkvorrichtung (22), wobei die Deichsel (24) aus dem ersten und dem zweiten Teil gebildet ist, der erste Teil (38) schwenkbar an dem Fahrzeug (10) angreift und die Lenkvorrichtung (22) Anschläge (34, 36) zur Begrenzung der Lenkbewegung aufweist.

0160893

FIG. 1

FIG. 2

FIG. 3

FIG. 4

20

12

34   26   36

32

22   40

22

32

48   58

56

61   60

54   58

46

54

61   38

44   42

56

24   54

2/2

FIG. 5

48   59

54

58   56

46   44

0160893